Europäisches Patentamt

European Patent Office

Office européen des brevets

(11) Veröffentlichungsnummer: **0 326 070**
**A2**

## (12) EUROPÄISCHE PATENTANMELDUNG

(21) Anmeldenummer: 89101171.0

(51) Int. Cl.4: **G01N 3/30**

(22) Anmeldetag: 24.01.89

(30) Priorität: 28.01.88 DE 3802500

(43) Veröffentlichungstag der Anmeldung:
**02.08.89 Patentblatt 89/31**

(84) Benannte Vertragsstaaten:
**DE FR GB IT**

(71) Anmelder: **ROBOFLEX AG**
**Amriswilerstrasse 106**
**CH-8570 Weinfelden(CH)**

(72) Erfinder: **Heck, Siegfried**
**Schwenninger Strasse 5**
**D-7032 Sindelfingen 6(DE)**

(74) Vertreter: **Brügel, Gerhard**
**Wendelsteinstrasse 12**
**D-7032 Sindelfingen(DE)**

(54) **Hydraulischer Antrieb für Schlagzug- und Durchstossversuche.**

(57) Werden lackierte und unlackierte Kunststoffe im Kfz-Karosseriebereich eingesetzt, müssen sie auf Schlagzähigkeit im Temperaturbereich + 23° C bis - 30° C geprüft werden. Dies erfolgt als instrumentierte Schlagzugprüfung in Anlehnung an DIN 53 448, oder als instrumentierter Durchstoßversuch nach DIN 53 443. Lackhersteller und Kunststoffverarbeiter als Zulieferer der Kfz-Industrie sind vielfach mittelständische Betriebe. Hydraulische Universalprüfmaschinen, mit denen die beschriebenen Versuche begrenzt durchgeführt werden können, liegen sowohl in der Anschaffung als auch im Betrieb außerhalb des Kostenrahmens dieser Betriebe.

Ein Prüfmaschinensystem mit einem hydraulischen Antrieb mit den kennzeichnenden Merkmalen der Patentansprüche kann das Problem lösen.

In einem Gehäuse (1) ist konzentrisch zu einem Arbeitskolben (2) ein Vorschubkolben (3) angeordnet. Öffnet das Servoventil (5), wird der Vorschubkolben (3) in Richtung Arbeitskolben (2) mit einer durch die Drossel (4) vorgegebenen Geschwindigkeit verschoben, und nimmt den Arbeitskolben (2) mit, wodurch die Schlagzugprobe (11) gedehnt und zerrissen wird. Die Druckkammer (7) dämpft den Aufschlag und verhindert Prellschwingungen, die das Kraftsignal stören würden.

Beim Durchstoßversuch ist der Funktionsablauf gleich, nur wird hier die Kolbenstange (8) aus dem Gehäuse (1) gestoßen.

Bild 1

## Hydraulischer Antrieb für Schlagzug- und Durchstoßversuche

Der Einsatz von Kunststoffen, vor allem lackierten Kunststoffen als Karosserieteile in Kraftfahrzeugen erfordert eine Prüfung derselben auf Schlagzähigkeit bei Temperaturen zwischen + 23° C und - 30° C. Die Prüfung erfolgt in der Regel als Schlagzugversuch nach DIN 53 448 mit Pendelschlagwerken oder mit hydraulischen Universalprüfmaschinen, und als Durchstoßversuch mit Fallbolzenwerken oder den bereits erwähnten hydraulischen Universalprüfmaschinen nach DIN 53 443. Eine qualifizierte Aussage über die Eignung von Kunststoffen als Karosserieteile kann nach heutigem Wissensstand nur mit sogennanten instrumentierten Prüfverfahren gewonnen werden. Bei diesen instrumentierten Prüfverfahren, angewendet im Schlagzugversuch in Anlehnung an DIN 53 448, und im Durchstoßversuch nach DIN 53 443, wird die während der Dehnung der Probe entstehende Kraft über dem Verformungsweg mittels elektronischen Kraftaufnehmern gemessen, und als Kraft-Weg-Diagramm ausgegeben. Aus diesem Diagramm kann die Arbeitsaufnahme der Probe, und damit die Schlagzähigkeit ermittelt werden. Voraussetzung ist, daß der Kraftverlauf des Diagramms der an der Probe wirkenden Kraft entspricht, und nicht durch Prell- oder sonstige Schwingungen überlagert ist, welche eine Auswertung erschweren oder unmöglich machen. Als Prüfmaschinen kommen in der Praxis nur noch die hydraulischen Universalprüfmaschinen zum Einsatz, denn nur mit ihnen können Prüfungen über einen ralativ großen Geschwindigkeitsbereich mit konstanter Prüfgeschwindigkeit gemacht werden. Sie haben jedoch auch Nachteile, wie später dargelegt wird.

Alle Prüfmaschinen, bei denen eine Masse beschleunigt wird, wie z.B. Pendelschlagwerke und Fallbolzenwerke, können nur in einem engen Geschwindigkeitsbereich eingesetzt werden. Geschwindigkeiten über 5,5 m/s sind aus technischen Gründen kaum realisierbar, bei Geschwindigkeiten unter 2,5 m/s wird die gespeicherte kinetische Energie so klein, daß sie zur Zerstörung der Probe nicht mehr ausreicht, oder zumindest die Geschwindigkeit über dem Verformungsweg stark abfällt, was das Resultat verfälscht. Daher soll auf diese Prüfmaschinen im weiteren nicht mehr eingegangen werden. In dem DE Patent 352947o ist eine neue Schlagzugprüfmaschine beschrieben, die zur Durchführung von Schlagzugversuchen gut geeignet ist. Durchstoßversuche können mit dieser Maschine nicht gemacht werden. In EP 0079979 B1 ist eine hydraulische Belastungseinheit, insbesondere für Katapultanlagen, beschrieben.

Mit hydraulischen Universalprüfmaschinen, deren Arbeitsachse in der Regel vertikal angeordnet ist, werden Schlagzugversuche durchgeführt in dem die Probe mit dem oberen Ende über einen Spannkopf mit einem Kraftaufnehmer verbunden ist, der an der oberen Traverse der Maschine montiert ist. Das untere Ende der Probe ist über einen weiteren Spannkopf mit einem Mitnehmer verbunden, der lose in eine Hülse taucht, die an der oberen Kolbenstange des Hydraulikzylinders befestigt ist. Diese Hydraulikzylinder entsprechen in ihrem Aufbau konventionellen Hydraulikzylindern mit beidseitiger Kolbenstange. Die Hülse bildet eine Vorlaufstrecke, die der relativ schwere Kolben des Zylinders benötigt, um auf die vorgegebene Geschwindigkeit zu beschleunigen. Danach nimmt das obere Ende der Hülse den Mitnehmer mit und dehnt und zerreißt dadurch die Probe. Der Kraftaufnehmer mißt den Kraftverlauf, während ein an der unteren Kolbenstange befestigter Wegaufnehmer den Weg mißt.

Beim Durchstoßversuch mit hydraulischen Universalprüfmaschinen wird auf das obere Ende der Kolbenstange eine Spannvorrichtung montiert, in der die scheibenförmige Probe gespannt wird. An der oberen Quertraverse wird der Durchstoßkörper befestigt, nach DIN 53 443 ein Bolzen mit 20 mm Durchmesser, dessen der Probe zugewandtes Ende eine Halbkugel bildet. Der Kraftsenor soll laut Norm im Durchstoßkörper möglichst nahe dem halbkugligen Ende angeordnet werden. Probe und Durchstoßkörper müssen so weit von einander entfernt sein, daß der Kolben mit der Spannvorrichtung auf die vorgegebene Nenngeschwindigkeit beschleunigen kann. Es sind auch Konstruktionen bekannt, bei denen der Durchstoßkörper am Kolben des Hydraulikzylinders befestigt ist und die Spannvorrichtung fest steht.

Nachteilig bei den beschriebenen Schlagzug- und Durchstoßprüfungen auf hydraulischen Universalprüfmaschinen ist beim Schlagzugversuch das Auftreffen des Mitnehmers auf das obere Ende der Hülse, und beim Durchstoßversuch das Auftreffen der Probe auf den Durchstoßkörper. Dabei werden Prellschwingungen ausgelöst, die das Kraftsignal überlagern und eine Auswertung erschweren oder ganz unmöglich machen.

Die Schlagzugprüfmaschine nach DE Patent 352947o vermeidet dieses Problem, denn dort ist ein sehr leichter Arbeitskolben direkt mit der Probe verbunden, wodurch prellfreie Signale erzeugt werden.

Kraftfahrzeughersteller, Kunststoffhersteller, Lackhersteller und Kunststoffverarbeiter benötigen ein Prüfmaschinensystem, das es gestattet, unlackierte und lackierte Kunststoffe vergleichbar und reproduzierbar auf Schlagzähigkeit bei Temperaturen zwischen + 23° C und - 30° C zu prüfen. Da in den beiden letztgenannten Unternehmensgruppen vielfach mittelständische Betriebe vertreten sind, für die aufwendige Prüfverfahren, deren Kosten in keinem Verhältnis zum Ertrag stehen, nicht in Frage kommen, diese Prüfungen jedoch erforderlich sind, ist es volkswirtschaftlich wichtig, ein in Anschaffung und Betrieb kostengünstiges Prüfmaschinensystem zu finden.

Die beschriebenen hydraulischen Universalprüfmaschinen liegen sowohl in der Anschaffung als auch durch die durch anspruchsvolle Bedienung verursachten Personalkosten weit außerhalb des Kostenrahmens solcher mittelständischen Betriebe. Hinzu kommt die unbefriedigende Qualität der Kraftsignale. Die Schlagzugprüfmaschine nach DE Patent 3529470 ist nur begrenzt brauch bar, da sie nur für Schlagzugversuche verwendet werden kann.

Aufgabe der Erfindung ist es, ein Prüfmaschinensystem zu finden, das mit geringen Änderungen sowohl für den Schlagzugversuch als auch für den Durchstoßversuch geeignet ist, in der Anschaffung wesentlich billiger ist als die beschriebenen Maschinen, dessen Bedienniveau auf der Ebene von Prüfmechanikern oder Laborantinnen liegt, und das verschiedenen Prüfstellen vergleich- und reproduzierbare unverprellte Signale liefert.

Diese Aufgabenstellung wird mit den kennzeichnenden Merkmalen der Patentansprüche gelöst.

Wie bereits erwähnt, sind hydraulische Universalprüfmaschinen mit einem Zylinder ausgerüstet, der einen Kolben mit beidseitiger Kolbenstange besitzt. Dieser Kolben ist relativ schwer, und benötigt daher eine relativ große Strecke zur Beschleunigung auf seine Nenngeschwindigkeit. Bei der im folgenden beschriebenen erfindungsgemäßen Konstruktion wird dieser schwere Kolben und damit die Beschleunigungsstrecke und der Kuppelvorgang zur Krafteinleitung in die Probe vermieden. Ein sehr leichter Arbeitskolben hat bereits vor der eigentlichen Krafteinleitung in die Probe Kontakt mit derselben. Er kann im Bruchteil einer Millisekunde beschleunigt werden, eine Beschleunigungsstrecke für den Arbeitskolben ist daher überflüssig. Diese Beschleunigungsstrecke ist zwischen dem Arbeitskolben und einem zusätzlichen Vorschubkolben angeordnet.

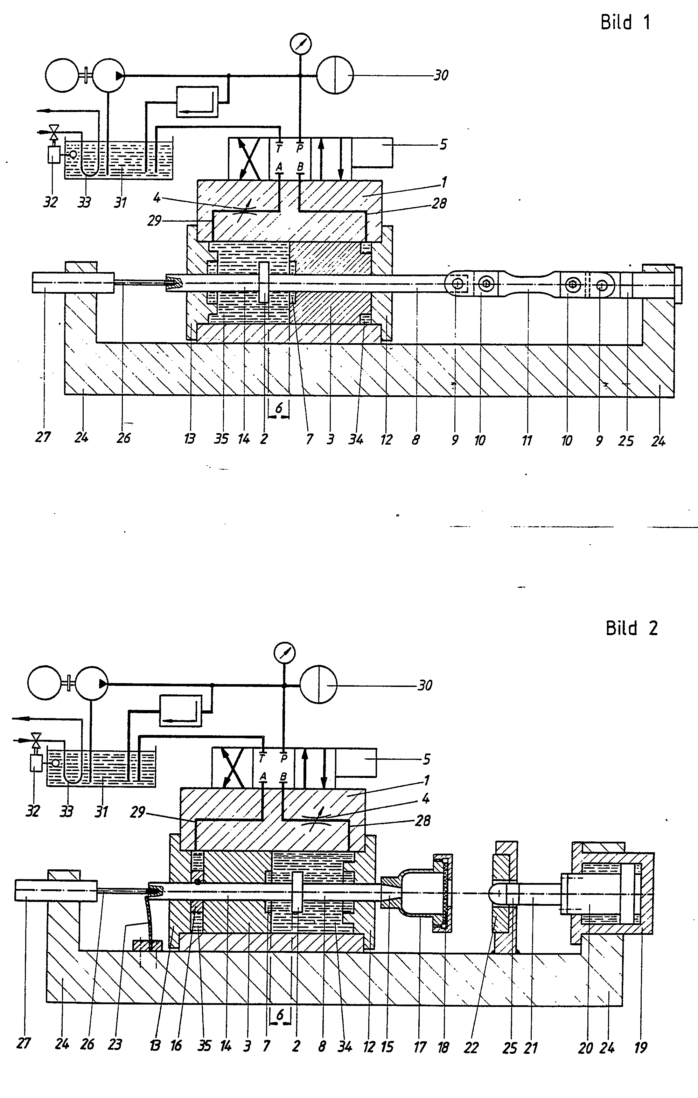

In einem einteiligen Gehäuse (1) ist konzentrisch zu einem Arbeitskolben (2) ein Vorschubkolben (3) angeordnet, Bild 1. Die Fläche des Vorschubkolbens (3) beträgt ein mehrfaches der Fläche des Arbeitskolbens (2). Der Arbeitskolben (2), der wesentlich kleiner ist als die Gehäusebohrung, welche dem Durchmesser des Vorschubkolbens (3) entspricht, ist mit seiner vorderen Kolbenstange (8) in dem vorderen Gehäusedeckel (12), und mit seiner hinteren Kolbenstange (14) im hinteren Gehäusedeckel (13) geführt. An die Probe (11) ist an beiden Seiten je ein Spannkopf (10) angeklemmt. Über Steckverbindungen (9) sind die Spannköpfe (10) auf der einen Seite mit der vorderen Kolbenstange (8) und auf der anderen Seite mit dem Kraftsensor (25) verbunden. Der Kraftsensor ist an dem Rahmen (24) befestigt. An der hinteren Kolbenstange (14) ist der Tauchanker (26) des induktiven Wegaufnehmers (27) befestigt, welcher im Rahmen (24) montiert ist.

An dem Gehäuse (1) ist das Servoventil (5) angebracht. Es ist durch die Leitung (28) mit dem vorderen Raum (34) der Gehäusebohrung, und mit der Leitung (29) mit dem hinteren Raum (35) der Gehäusebohrung verbunden. In der Leitung (29), durch die während des Prüfvorgangs das vom Vorschubkolben (3) verdrängte Öl abfließt, ist eine verstellbare Drossel (4) angeordnet. Wird der Prüfvorgang gestartet öffnet das Servoventil (5) die Verbindung P nach B und A nach T. Durch das aus dem Speicher (30) in dem Raum (34) fließende Öl wird der Vorschubkolben (3) in Richtung Arbeitskolben (2) verschoben und beschleunigt, bis er eine durch die Einstellung der Drossel (4) vorgegebene Geschwindigkeit erreicht. Danach herrscht auf beiden Seiten des Vorschubkolbens (3) gleicher Druck, wenn die minimale Reibung des Vorschubkolbens vernachlässigt wird. Der Vorschubkolben (3) besitzt auf seiner dem Arbeitskolben (2) zugewandten Seite eine Druckkammer (7), in die der Arbeitskolben (2) mit minimalem Spiel eingepasst ist. Erreicht der Vorschubkolben (3) den Arbeitskolben (2) versperrt der Arbeitskolben (2) die Druckkammer (7), in der sich ein Ölpolster bildet. Auf diesem Ölpolster schwimmt nun der Arbeitskolben (2) und wird von dem Vorschubkolben (3) mitgenommen. Dadurch wird die Probe (11) gedehnt und zerrissen. Während der Vorschubkolben (3) die Beschleunigungsstrecke (6) durchläuft, muß das verdrängte Öl um den Arbeitskolben (2) herumfließen. Dabei entsteht ein Staudruck auf dem Arbeitskolben (2), welcher eine geringe Vorkraft erzeugt, die die Steckverbindungen (9), die Probe (11) und den Kraftsensor (25) spielfrei vorspannt. Diese Vorkraft, sowie die dämpfende Wirkung des Ölpolsters der Druckkammer (7) bei der Mitnahme des Arbeitskolbens (2), verhindern die Anregung von Prellschwingungen beim Beginn der Probenbelastung, es entsteht ein prellfreies Kraftsignal das dem Kraftverlauf in der Probe entspricht.

Da der Arbeitskolben (2) mit Kolbenstangen (8 + 14), sowie der Spannkopf (10) sehr leicht gehalten sind, werden sie im Bruchteil einer Millisekunde beschleunigt, der Arbeitskolben (2) taucht nur geringfügig in die Druckkammer (7) ein bis seine Geschwindigkeit der des Vorschubkolbens entspricht. Eine kleine Menge Öl die durch den Spalt zwischen Arbeitskolben (2) und Druckkammer (7), sowie durch den Spalt zwischen Vorschubkolben (3) und Kolbenstange (8) fließt, übt eine dämpfende Wirkung aus. Der in der Druckkammer auf den Arbeitskolben wirkende Druck entspricht den üblichen Drücken in servohydraulischen Prüfmaschinen.

Die zur Beschleunigung des Arbeitskolbens (2) und zum Abziehen der Probe (11) vom Vorschubkolben (3) aufzubringende Kraft bremst den Vorschubkolben. Dadurch verringert sich der Druckabfall zwischen Speicher (30) und dem Raum (34), d. h. der Druck auf dieser Seite des Vorschubkolbens (3) steigt an. Gleichzeitig verringert sich der Druckabfall zwischen Raum (35) und Drossel (4) zum Tank (31), d.h. der Druck auf der dem Arbeitskolben (2) zugewandten Seite des Vorschubkolbens (3) fällt. Nun ist in hydraulischen Systemen mit blendenartigen Öffnungen der zur Überwindung der Strömungswiederstände erforderliche Druck der Strömungsgeschwindigkeit im Quadrat proportional. Es genügt daher bereits eine geringe Verminderung der Geschwindigkeit des Vorschubkolbens (3), und damit der Strömungsgeschwindigkeit im System, um am Vorschubkolben eine Druckdifferenz zu erzeugen, die ausreicht zur Beschleunigung des Arbeitskolbens und zur Dehnung des Probe bis zum Bruch. In der Praxis ist die Verringerung der Geschwindigkeit des Vorschubkolbens geringer als die zulässige Toleranz der Prüfgeschwindigkeit.

Durch diese Auslegung, die große Fläche des Vorschubkolbens (3) und die Drossel (4) im Abfluß, die den wesentlichsten Anteil an der sich am Vorschubkolben auf- und abbauenden Druckdiffernz hat, ist das System selbstregelnd. Das Bedienungspersonal braucht nach Einschalten der Prüfmaschine lediglich an der Drossel (4) die Geschwindigkeit vorwählen, und warten bis das Hydrauliköl seine Temperatur erreicht hat, die durch das Kühlwasserventil (32) und den Kühler (33) konstant gehalten wird. Danach können die Prüfungen durchgeführt werden.

Wird der hydraulische Antrieb mit den kennzeichnenden Merkmalen nach Anspruch 1-3 für Durchstoßversuche verwendet ist die Funktion der wesentlichen Bauteile und damit die selbstregelnde Wirkung dieselbe wie bereits beschrieben, im folgenden werden nur noch die zusätzlichen oder geänderten Bauteile beschrieben, sowie der Ablauf eines Durchstoßversuchs nach Anspruch 3. Identische Bauteile mit identischen Funktionen haben in Bild 1-4 dieselben Nummern.

Für Durchstoßversuche wird die vordere Kolbenstange (8) an ihrem Ende mit einem Steilkegel (15) versehen, der zur Aufnahme der Spannglocke (17) mit der Probe (18) dient, und auf der hinteren Kolbenstange (14) eine Scheibe (16) montiert, Bild 2. Der Arbeitskolben (2) ist nun zwischen dem vorderen Gehäusedeckel (12) und dem Vorschubkolben (3) angeordnet, und die Drossel (4) liegt in der Leitung (28). Am Rahmen (24) ist ein Gegenzylinder (19) derart angeordnet, daß seine Achse mit der Achse des Arbeitskolbens (2) fluchtet. An seiner Kolbenstange (20) ist der Durchstoßkörper (21) befestigt. Hinter der halbkugelförmigen Spitze des Durchstoßkörpers ist der Kraftsensor (25) angeordnet, entsprechend der Forderung von DIN 53 443. Zwischen Gegenzylinder (19) und Gehäuse (1) befindet sich der Abstreifer (22). In der Ruhestellung, Bild 2, ist im Servoventil (5) P mit B und A mit T verbunden, der Vorschubkolben (3) drückt die Scheibe (16) gegen den hinteren Gehäusedeckel (13), und das Ende der hinteren Kolbenstange (14) gegen die Feder (23).

Da die Achse der Durchstoß-Prüfmaschine vertikal angeordnet ist, kann die Spannglocke (17) einfach auf den nicht selbst haltenden Steilkegel (15) der vorderen Kolbenstange (8) ohne weitere Befestigungselemente aufgesetzt werden. Sie kann dadurch einfach und ohne Werkzeuge mit einem Handgriff in die Prüfmaschine eingesetzt und wieder entnommen werden. Dies ist wichtig bei temperierten Proben. Zweckmäßigerweise werden mehrere Spannglocken verwendet, in die außerhalb der Prüfmaschine die scheibenförmigen Durchstoßproben (18) gespannt werden. Diese Spannglocken werden in einer getrennten Temperierkammer auf die geforderte Temperatur gebracht. Haben Spannglocke und Probe die Temperatur erreicht, wird die Spannglocke mit der Probe aus der Temperierkammer entnommen und auf den Steilkegel (15) der Kolbenstange (8) gesetzt und die Probe durchstoßen. Zwischen Entnahme aus der Temperierkammer und Durchstoßen vergehen maximal 5 Sekunden. Dadurch ist gewährleistet, daß die Probe, die durch die Spannglocke weitgehend gegen die Raumtemperatur abgeschirmt ist, bis zum Durchstoßen ihre Temperatur behält. Diese erfindungsgemäße Anordnung der Probe (18) in einer einfach auf die Kolbenstange (8) aufzusetzenden Spannglocke (17) ist ein wesentlicher Vorteil gegenüber anderen Konstruktionen, bei denen die Spannglocke fest mit der Kolbenstange des Prüfmaschinenzylinders verbunden ist, und die Probe einzeln in einer in die Prüfmaschine eingebauten, teuren Temperierkammer temperiert werden muß. Bei der erfindungsgemäßen Konstruktion können ständig temperierte Spannglocken mit Proben in einer einfachen Temperierkammer vorgehalten werden, der Zeitaufwand für einen Versuch wird damit nur noch durch die Versuchsdatenerfassung, und nicht mehr durch die Temperierzeit der Probe bestimmt.

Die einfache und kostengünstige Konstruktion der Prüfmaschine, niedrige Temperierkosten, einfache Bedienung und zügiger Prüfablauf ergeben insgesamt niedrige Prüfkosten, die auch für mittelständische Betriebe tragbar sind.

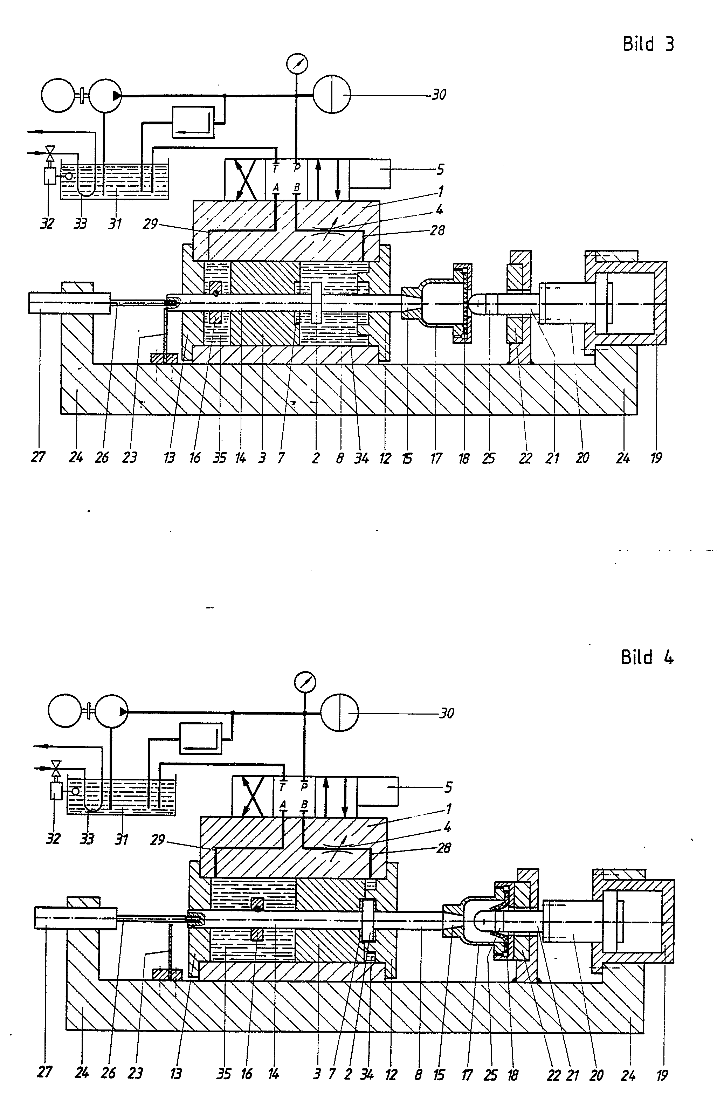

Ein Durchstoßversuch nach den kennzeichnenden Merkmalen der Patentansprüche hat folgenden Ablauf: Eine Spannglocke (17) mit Probe (18) wird auf den Steilkegel (15) der Kolbenstange (8) aufgesetzt, und über eine Zweihandsicherung die Steuerung gestartet. Die Kolbenstange (20) des Gegenzylinders (19) fährt vor bis sich die. Spitze des Durchstoßkörpers (21) ca. 1-2 mm vor der Oberfläche der Probe (18) befindet, Bild 3. Danach werden im Servoventil (5) P mit A und B mit T verbunden. Dadurch wird der Vorschubkolben (3) in Richtung Arbeitskolben (2) verschoben, und die Scheibe (16) freigegeben. Die Feder (23) und der auf den Arbeitskolben (2) wirkende Strömungsdruck drücken nun über die Kolbenstangen (14 + 8) die Spannglocke (17) und die Probe (18) mit geringer Kraft spielfrei gegen das halbkugelförmige Ende des Durchstoßkörpers (21), Bild 3. Nach Durchlaufen der Beschleunigungsstrecke (6) erreicht der Vorschubkolben (3) die durch die Drossel (4) vorgegebene Geschwindigkeit und nimmt den Arbeitskolben (2) über das Ölpolster in der Druckkammer (7) mit. Dieser Ablauf und die Selbstregelung entspricht dem Ablauf beim beschriebenen Schlagzugversuch. Hat der Vorschubkolben (3) den Arbeitskolben (2) erreicht, wird der sehr leicht gehaltene Arbeitskolben (2) mit Kolbenstangen (8 + 14), und die ebenfalls sehr leicht gehaltenen Spannglocke (17) mit Probe (18) im Bruchteil einer Millisekunde auf die gleiche Geschwindigkeit wie der Vorschubkolben (3) beschleunigt, und dadurch die Probe durchstoßen. Die Spannglocke mit der Probe wird soweit über den Durchstoßkörper gestoßen, bis die Spannglocke am Abstreifer (22), der aus einem elastischen Werkstoff besteht, anstößt, Bild 4. Der Weg, den die Spannglocke dabei zurücklegt, wird mit dem Wegaufnehmer (27) gemessen. Danach zieht der Gegenzylinder (19) den Durchstoßkörper (21) zurück, und eine ggf. an dem Durchstoßkörper haftende zähe Probe wird dabei abgestreift. Zuletzt steuert das Servoventil (5) um, und der Vorschubkolben (3) schiebt über die Scheibe (16) den Arbeitskolben mit Kolbenstangen und Spannglocke zurück in die Ausgangspositionen, Bild 2.

## Ansprüche

1. Hydraulischer Antrieb für Schlagzug- und Durchstoßversuche, zur Durchführung von instrumentalen Schlagzugprüfungen, gekennzeichnet durch folgende Merkmale:
in einem Gehäuse (1) ist konzentrisch zu einem Arbeitskolben (2) ein an einer Kolbenstange (8,14) befestigter Vorschubkolben (3) angeordnet, die Querschnittsfläche des Vorschubkolbens (3) entspricht dem Innenquerschnitt des Gehäuses (1) und beträgt ein Mehrfaches der Querschnittsfläche des Arbeitskolbens (2).

2. Hydraulischer Antrieb nach Anspruch 1, dadurch gekennzeichnet, daß die Geschwindigkeit mit der der Arbeitskolben (2) vom Vorschubkolben (3) mitgenommen wird durch eine im Hydraulikabfluß (29) liegende Drossel (4) einstellbar ist.

3. Hydraulischer Antrieb nach einem der vorhergehenden Ansprüche, dadurch gekennzeichnet, daß im Vorschubkolben (3) eine Druckkammer (7) vorgesehen ist, in die der Arbeitskolben (2) mit kleinem Spiel paßt, wodurch der Aufschlag zwischen Vorschubkolben (3) und Arbeitskolben (2) gedämpft wird.

4. Hydraulischer Antrieb nach einem der vorhergehenden Ansprüche, gekennzeichnet durch die folgenden zusätzlichen Merkmale:
das Ende der vorderen Kolbenstange (8) ist mit einem steilen Kegel (15) versehen, der zur Aufnahme einer Spannglocke (17) dient, in der eine Probe (18) montiert ist, in der Achse der Spannglocke (17) ist ein Gegenzylinder (19) angeordnet, an dessen Kolbenstange (20) der Durchstoßkörper (21) befestigt ist.

5. Hydraulischer Antrieb nach Anspruch 4, dadurch gekennzeichnet, daß am Ende der hinteren Kolbenstange (14) eine Feder (23) angeordnet ist, die auf die Kolbenstange (14) drückt.

6. Verfahren zur Durchführung eines Durchstoßvorganges mit einer Durchstoßprüfmaschine nach einem der bisherigen Ansprüche, gekennzeichnet durch folgende Merkmale:
Aufsetzen der Spannglocke (17) mit Probe (18) auf den Kegel (15);
Starten der Steuerung;
eine Kolbenstange (20) des Gegenzylinders (19) fährt vor, bis sich die Spitze des Durchstoßkörpers (21) ca. 1 bis 2 mm vor der Probenoberfläche befindet;
ein Servoventil (5) öffnet, und der Vorschubkolben (3) wird durch den Ölstrom in Richtung Spannglocke (17) verschoben; gleichzeitig drückt die Feder (23) über die Kolbenstange (8,14) die Spannglocke (17) mit Probe (18) mit leichter Kraft gegen die Spitze des Durchstoßkörpers (21);
im weiteren Verlauf nimmt der Vorschubkolben (3) den Arbeitskolben (2) mit, wodurch die Probe (18) durchstoßen wird;
der Gegenzylinder (19) zieht den Durchstoßkörper (21) zurück, dabei wird die Spannglocke (17) mit der Probe (18) an einem Abstreifer (22) abgestreift;
das Servoventil (5) steuert um und der Vorschubkolben (3) schiebt den Arbeitskolben (2) über die Scheibe (16) zurück in die Ausgangsstellung.

EP 0 326 070 A2

Bild 1

Bild 2

Bild 3

Bild 4